(19) Europäisches Patentamt / European Patent Office / Office européen des brevets

(11) **EP 2 980 032 A1**

(12) **EUROPEAN PATENT APPLICATION**
published in accordance with Art. 153(4) EPC

(43) Date of publication:
**03.02.2016 Bulletin 2016/05**

(21) Application number: **14774251.4**

(22) Date of filing: **20.03.2014**

(51) Int Cl.:
***C03B 9/193*** (2006.01)

(86) International application number:
**PCT/JP2014/057727**

(87) International publication number:
**WO 2014/156941 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2013 JP 2013064689**

(71) Applicant: **Nihon Yamamura Glass Co., Ltd.**
**Amagasaki-shi, Hyogo 660-8580 (JP)**

(72) Inventors:
• **UEDA Mitsuo**
**Amagasaki-shi**
**Hyogo 660-8580 (JP)**

• **WADA Ryu**
**Amagasaki-shi**
**Hyogo 660-8580 (JP)**
• **KATAOKA Masaki**
**Amagasaki-shi**
**Hyogo 660-8580 (JP)**
• **SATO Akihiro**
**Amagasaki-shi**
**Hyogo 660-8580 (JP)**

(74) Representative: **Manitz, Finsterwald & Partner GbR**
**Martin-Greif-Strasse 1**
**80336 München (DE)**

(54) **PARISON FORMING DEVICE**

(57) A parison forming apparatus comprising: a molding die into which a gob is introduced; a plunger 1 entering into the inside of the molding die for forming a parison from the gob together with the molding die; a cylinder that allows the plunger 1 to reciprocally move with respect to the molding die; and a cooling device for introducing cooling air into the inside of the plunger 1 to cool the plunger 1. The base end portion of the plunger 1 is connected to and held by the head of a piston rod 12 of the cylinder via a plunger holding mechanism 2. The plunger holding mechanism 2 has an adapter 21 connected to the head of the piston rod 12, and the adapter 21 is integrally provided with a tubular part 33 having a fitting hole 32 adapted to the cylindrical outer shape of the base end portion of the plunger 1. The base end portion of the plunger 1 is fitted in and held by the fitting hole 32 of the tubular part 33 while a connection ring 22 for connecting the adapter 21 and the base end portion of the plunger 1 fitting on the tubular part 33 of the adapter 21. The inside of the plunger 1 communicates with an air discharge passage through an exhaust passage 27 provided on the adapter 21, and the air discharge passage is configured to communicate with an exhaust device for guiding the air after cooling to the air discharging passage by applying a suction force to the air discharge passage, thereby exhausting the air to the outside.

[Fig. 1]

EP 2 980 032 A1

**Description**

[FIELD OF THE INVENTION]

The present invention relates to a parison forming apparatus for forming a parison by entering a plunger into a molding die into which a gob is introduced. The present invention relates in particular to a parison forming apparatus intended for molding an ultra lightweight glass container.

[BACKGROUND OF THE INVENTION]

A step of forming an intermediate molded product called "parison" is included in the process of manufacturing a container such as a glass bottle. In this step, molten glass called "gob" is introduced into a molding die, thereafter a plunger is inserted into the molding die from its top, and then a parison is formed by applying a pressure to the gob.

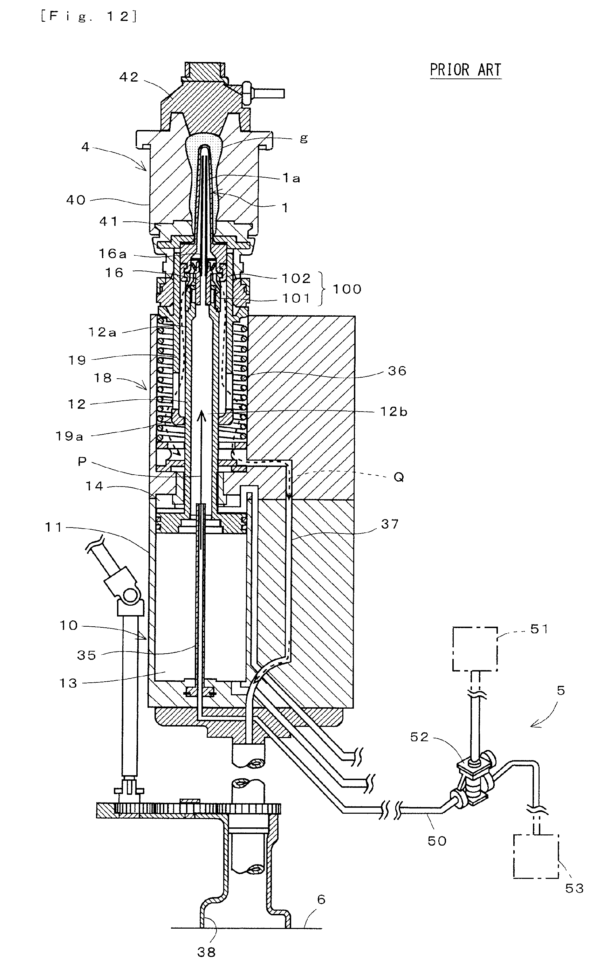

Fig. 12 shows the configuration of a conventional parison forming apparatus used for forming a parison. The parison forming apparatus comprises a molding die 4, a plunger 1, a cylinder 11 which allows the plunger 1 to move reciprocally, and so forth (for example, see Patent Literature 1). The molding die 4 includes a mouth molding die 41 for forming the mouth portion of a parison g, a rough molding die 40 for forming the body part of the parison g, and a baffle 42 for forming the bottom part of the parison g. The plunger 1 is formed as a tapered hollow body and has a base end portion formed into a cylindrical shape.

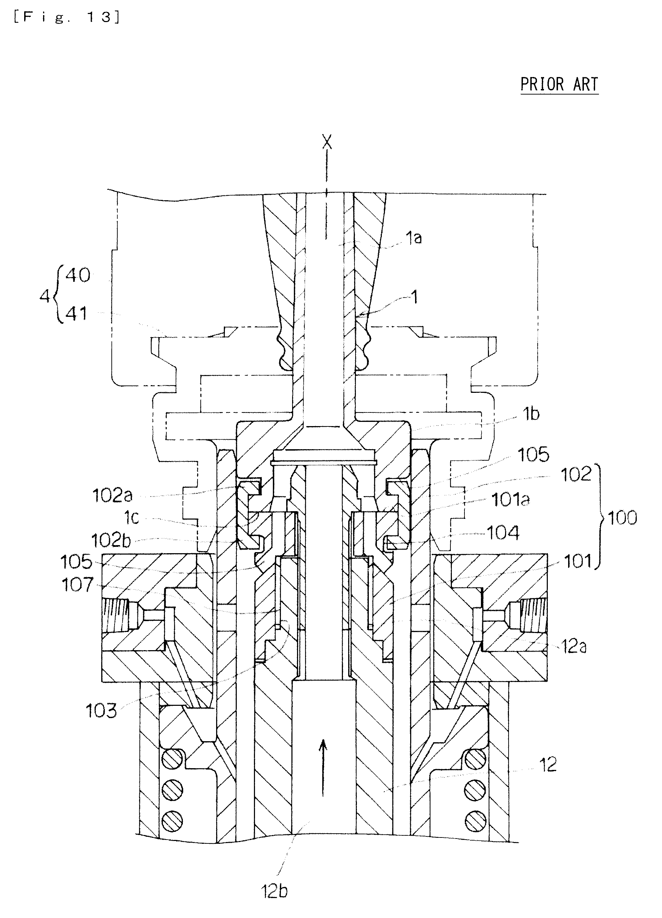

The cylinder 11 has a hollow piston rod 12. The base end of the plunger 1 is connected to and held by the top of a piston rod 12 via a plunger holding mechanism 100. The plunger holding mechanism 100 includes a tubular shaped adapter 101 and a connection ring 102 as shown in Fig. 13. A threaded portion 103 is formed on the inner peripheral surface of the lower part of the adapter 101. An annular groove 104 is formed on the outer peripheral surface of the upper part of the adapter 101. The adapter 101 is secured to a top 12a of the piston rod 12 with the threaded portion 107 formed on the outer peripheral surface of the top 12a of the piston rod 12 screwed into the threaded portion 103.

The connection ring 102 has a donut shaped rigid body, which can be divided into two parts in a radial direction. An annular groove 105 is formed on the outer peripheral surface of the base end portion 1b of the plunger 1. An upper end portion 102a of the connection ring 102 is arranged to engage with the annular groove 105. A lower end portion 102b of the connection ring 102 is arranged to engage with the annular groove 104 formed on the outer peripheral surface of the upper part of the adapter 101. Thereby, the base end portion 1b of the plunger 1 and the adapter 101 are connected to each other. A plurality of exhaust passages 106 for discharging air for cooling (hereinafter referred to as "cooling air") that was supplied into a hollow part 1a of the plunger 1 is disposed at equiangular positions on the adapter 101.

When compressed air is supplied into a first chamber 13 inside the cylinder 11, the piston rod 12 moves upward. When the plunger 1 reaches its uppermost limit position, the plunger 1 enters deeply into the molding die 4. Then, when compressed air is supplied into a second chamber 14 inside the cylinder 11 and the first chamber 13 is brought into the discharged state, the piston rod 12 moves downward and the plunger 1 exits from the molding die 4.

An introduction pipe 16 for introducing cooling air is connected to the top of the piston rod 12. The introduction pipe 16 has a nozzle part 16a for introducing the cooling air near the top of the plunger 1. An air supply pipe 35 vertically passes through the cylinder 11. The upper end of the air supply pipe 35 communicates with the hollow part 12b of the piston rod 12. The inner hole of the air supply pipe 35 and the hollow part 12b of the piston rod 12 constitute an air introduction passage P for introducing cooling air into the plunger 1.

A plunger positioner 18 is located above the cylinder 11. The plunger positioner 18 includes therein a cylindrical plunger guide 19 for reciprocatably supporting the plunger 1 and a spring 36 for supporting the plunger guide 19 while energizing the plunger guide 19 toward the molding die 4. When removing the plunger 1 from the parison g after forming the parison g, the plunger guide 19 is pressed downward against the spring force of the spring 36.

The inside of the plunger guide 19 communicates with the inside of the plunger 1 via the exhaust passages 106. An opening 19a is formed at the lower end of the plunger guide 19. An air passage 37 is formed inside the cylinder wall of the cylinder 11. The air passage 37 communicates with the inside of the plunger guide 19 via the opening 19a. The air passage 37 and each part communicating with the air passage 37 constitute an air discharge passage Q for exhausting the air after cooling the plunger 1 (hereinafter referred to as "exhaust air"). The air discharge passage Q communicates with an exhaust device 6 for exhausting the exhaust air by applying a suction force to the air discharge passage Q.

Cooling air is supplied to the air introduction passage P through an air feed pipe 50 from a manifold 53 constituting a cooling device 5. An actuation valve 52 is interposed partway in the air feed pipe 50. The actuation valve 52 is opened or closed by an actuation valve drive mechanism 51, and when the actuation valve 52 is actuated to open, cooling air is introduced into the air introduction passage P from the manifold 53 through the air feed pipe 50.

The cooling air is fed to the introduction pipe 16 through the air introduction passage P. The cooling air is introduced near the top of the plunger 1 by the nozzle part 16a of the introduction pipe 16. A plurality of air holes (not shown) is provided on the end of the nozzle part 16a. The cooling air is fed into the hollow part 1a of the plunger 1 through each air hole. The cooling air after cooling the plunger 1 is exhausted through the exhaust passages 106 as exhaust air. The exhaust passages 106 communicate with an exhaust port 38 via the air discharge passage Q.

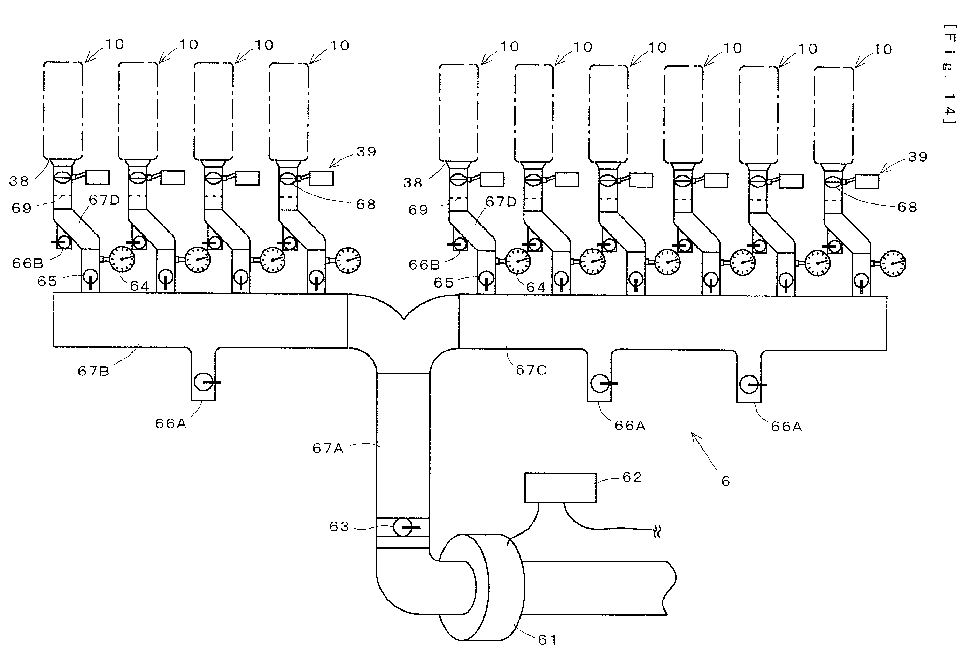

Fig. 14 shows an example of the configuration of the exhaust device 6 connected to each exhaust port 38 of a plurality of parison forming mechanisms. The exhaust device 6 is constituted by a blower 61, an exhaust pipe 67A having bifurcated branch pipes 67B, 67C, and a plurality of communication pipes 67D communicating with either the bifurcated branch pipe 67B or the bifurcated branch pipe 67C. When driving the blower 61, a suction force is applied to the air discharge passage Q of the plurality of parison forming mechanisms 10 and exhaust air is introduced to the exhaust device 6 from each of the parison forming mechanisms 10.

In the blower 61, the motor speed is controlled by an inverter 62. The exhaust pipe 67A is provided with an on/off valve 63 that can be opened or closed manually. The suction force applied to the air discharge passage Q of each parison forming mechanism 10 can be adjusted by the driving control of the blower 61 using the inverter 62 and the opening degree control of the on/off valve 63. The magnitude of the suction force is set to an optimum value corresponding to the pressure of the exhaust air exhausted from the parison forming mechanism 10. If the suction force is set to a value lower than the pressure of the exhaust air, foreign substances and so forth existing near the outer periphery of the plunger 1 cannot be exhausted together with the exhaust air. Meanwhile, if the suction force is set to a value higher than the pressure of the exhaust air, even foreign substances suspended outside the parison forming mechanism 10 would be sucked into the air discharge passage Q.

Butterfly valves 68 controlled to open and close by the valve drive mechanism 39 are respectively interposed in each communication pipe 67D. Each valve drive mechanism 39 causes the butterfly valve 68 to open in synchronization with the timing of introducing air into the plunger 1 of each parison forming mechanism 10. Thereby, the communication pipe 67D is opened to allow the suction force of the blower 61 to be applied to the parison forming mechanism 10.

Each communication pipe 67D is provided with a natural exhaust port 66B and a filter 69 in addition to a pressure gauge 64 for measuring the suction force and an adjustment valve for adjusting the suction force. The suction force generated by the blower 61 has different magnitudes in accordance with the distance from each communication pipe 67D to the blower 61, and thus the suction forces applied to respective communication pipes 67D are set equal to each other by adjusting the adjustment valves 65 while watching the pressure gauges 64.

Each natural exhaust port 66B is opened, for example, when searching the pressure of the exhaust air naturally exhausted from the parison forming mechanism 10 with the adjustment valve 65 closed and when discharging the exhaust air naturally exhausted from the parison forming mechanism 10 through the communication pipe 67D. The filter 69 is provided to remove foreign substances that are exhausted from the parison forming mechanism 10 together with the exhaust air.

Natural exhaust ports 66A are provided respectively for the bifurcated branch pipes 67B, 67C. These natural exhaust ports 66A are opened when discharging the exhaust air naturally exhausted from each parison forming mechanism 10 through the bifurcated branch pipes 67B, 67C in the case that a parison is formed while the blower 61 is stopped.

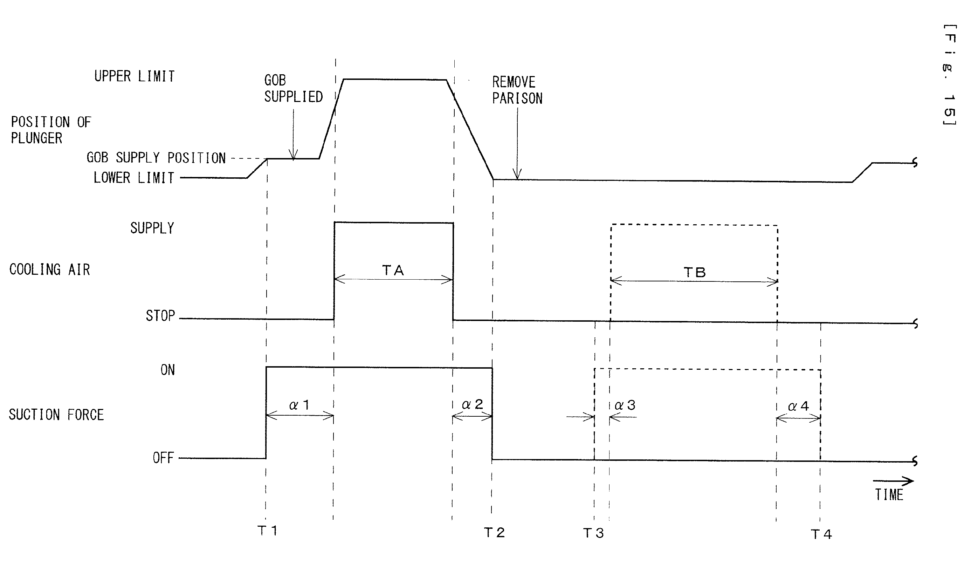

Fig. 15 shows the relationship among the position of the plunger 1 that moves up and down, the start and stop timing of supplying the cooling air, and the timing of applying a suction force to the parison forming mechanism 10. The position of the plunger 1 that moves up and down is determined by the reciprocation movement of the cylinder 11. Further, the start and stop timing of supplying the cooling air is determined by the opening and closing operation of the actuation valve 52 of the cooling device 5. The timing of applying the suction force to the parison forming mechanism 10 is determined by the opening and closing operation of the butterfly valve 68 of the exhaust device 6. In this embodiment, the blower 61 of the exhaust device 6 is continuously run.

Now, when the plunger 1 moves up from the lower limit position to a gob supply position before supplying the gob, the butterfly valve 68 opens at the timing of T1 and the suction force due to the exhaust device 6 is applied to the parison forming mechanism 10. The supply of the cooling air using the cooling device 5 is started after a delay of a prescribed time $\alpha 1$ behind the opening operation of the butterfly valve 68. Meanwhile, the plunger 1 starts moving up after the supply of the gob before supplying the cooling air. Here, the suction force is activated prior to the supply of the cooling air and the moving-up operation of the plunger 1 to remove the foreign substances and so forth remaining in the parison forming mechanism 10 through the air discharge passage Q.

The supply of the cooling air is continued for a time length TA from the time right before the plunger 1 reaches the upper limit position to the time right after the plunger 1 starts moving down, while the suction force is continuously applied to the parison forming mechanism 10. The supply of the cooling air is stopped right after the plunger 1 starts moving down. When the plunger 1 moves down to the lower limit position at the timing of T2 delayed by a prescribed time $\alpha 2$ from the stop of supplying the cooling air, the butterfly valve 68 is closed to end the application of the suction force to the parison forming mechanism 10. Here, the suction force is continued to be applied to the parison forming mechanism 10 even after the plunger 1 is moved down and the supply of the cooling air is stopped in order to prevent foreign substances remaining in the parison forming mechanism 10 from entering into the parison g due to negative pressure generated by the moving-down of the plunger.

When the plunger 1 moves down to the lower limit position, the rough molding die 40 of the molding die 4 is opened, and the parison g held by the mouth molding die 41 is transferred to a finishing die together with the mouth molding die 41. When the mouth molding die 41 is returned to the rough molding die 40 after the parison g is delivered to the finishing die, the plunger 1 moves up to the gob supply position and the gob is supplied to restart the forming of a parison.

When the temperature of the plunger 1 excessively increases or when the temperature of the plunger 1 does not decreases easily, the cooling air is supplied again for a prescribed time length TB before the plunger 1 located at the lower limit position moves up to the gob supply position. Also, in this case, the butterfly valve 68 is opened at a timing T3 a prescribed time $\alpha 3$ earlier than the supply of the cooling air to apply the suction force to the parison forming mechanism 10. Then, the butterfly valve 68 is closed at a timing T4 a prescribed time $\alpha 4$ later than the stop of the cooling air supply to stop the application of the suction force to the parison forming mechanism 10.

[PRIOR ART DOCUMENTS]

[PATENT LITERATURE]

[PATENT LITERATURE 1] The publication of Japanese Patent No. 4392107

[SUMMARY OF THE INVENTION]

[PROBLEM TO BE SOLVED BY THE INVENTION]

In the plunger holding mechanism 100 shown in Fig. 13, the lower end surface 1c of the plunger base end portion 1b in the plunger 1 and the upper end surface 101a of the adapter 101 are in contact with each other. The connection between the plunger 1 and the adapter 101 is maintained only by a pull force due to the connection ring 102 along the direction of a shaft center X. For this reason, the condition for supporting the plunger 1 becomes unstable, in addition to that, a wear progresses on the abutment surface between the lower end surface 1c of the plunger base end portion 1b in the plunger 1 and the upper end surface 101a of the adapter 101 during long-term use, and thereby generating looseness in the connection of the plunger 1 to the adapter 101.

When looseness is generated in the plunger 1, the top of the plunger 1 deflects in the radial direction in the molding die 4, and the plunger 1 is inclined to enter into molten glass. As a result, when the top of the plunger 1 is removed from the inside of the molding die, an excessive stress is applied to the mouth portion of the parison g, thereby causing chips and cracks. Moreover, in the worst case, the removal operation of the plunger 1 would be badly affected.

In particular, in an ultra lightweight bottle having a thin thickness over a whole glass bottle, when the top of the plunger 1 deflects in the radial direction, being in the inclined state, the molten glass cannot be distributed evenly all over the parison g. As a result, variation occurs in the wall thickness of the parison g and a portion with particularly thin wall thickness is subjected to significant strength degradation. The significant strength degradation is likely to cause damage to glass bottles that are brought into contact with each other in the manufacturing process and in the distribution process.

Further, the lower end surface 1c of the base end portion 1b in the plunger 1 and the upper end surface 101a of the adapter 101 are brought into contact with each other, however if there is looseness or radially directed deflection in the plunger 1, a gap is generated on the abutment surface, and thus the cooling air and the exhaust air leak through the gap to decrease cooling efficiency and exhaust efficiency. As a result, the foreign substances and so forth generated in the parison forming mechanism 10 adhere to the inner surface of the parison g without being removed sufficiently therefrom, thus causing degradation in strength of the parison g.

The present invention has been made to address these issues. That is, an object of the present invention is to provide a parison forming apparatus capable of preventing strength degradation of a parison due to the variation of wall thickness and the adherence of foreign substances especially for an ultra lightweight bottle by employing a structure in which the base end portion of a plunger is held by a tubular part of an adapter to suppress the looseness in the plunger and the radially directed deflection of the plunger while improving the sealability of a connection portion between the base end portion of the plunger and the adapter.

[MEANS FOR SOLVING THE PROBLEM]

A parison forming apparatus according to the present invention comprises: a molding die having a gob introduced thereinto; a plunger entering into the molding die for forming a parison using the gob together with the molding die; a cylinder for allowing the plunger to move reciprocally with respect to the molding die; and a cooling device for cooling the plunger by introducing cooling air into the plunger. The plunger has the base end portion connected to and held by the top of a piston rod in the cylinder via a plunger holding mechanism. The plunger holding mechanism has an adapter connected to the top of the piston rod and the adapter is integrally provided with a tubular part having a fitting hole adapted to the cylindrical outer shape of the base end portion of the plunger. The base end portion of the plunger is fitted in and held by the fitting hole of the tubular part while a connection ring for connecting the adapter and the base end portion of the plunger fitting on the tubular part of the adapter. The inside of the plunger communicates with an air discharge passage via an exhaust passage provided on the adapter, and the air discharge passage communicates with an exhaust device for introducing the air after cooling into the air discharge passage and exhausting the air after cooling to the outside by applying a suction force to the air discharge passage.

In the parison forming apparatus configured as described above, the base end portion of the plunger is fitted in and firmly held by the fitting hole of the tubular part of the adapter, thereby suppressing the looseness in the base end portion of the plunger and the radially directed deflection of the top of the plunger and preventing the plunger from being inclined to enter into molten glass. When the top of the plunger is removed from the inside of the molding die, an excessive stress applied to the mouth portion of the parison can be avoided, thereby preventing the generation of chips and cracks. Thus, the removal operation of the plunger does not cause any problem. Further, the molten glass is provided evenly over a whole parison, and thus a favorable distribution for the wall thickness of the parison may be ensured. In particular, in an ultra lightweight bottle having a thin thickness over a whole glass bottle, it can be avoided that a portion with particularly thin wall thickness is generated and subjected to significant strength degradation. Furthermore, the base end portion of the plunger is fitted in the fitting hole in the tubular part of the adapter so that the sealability of a connection portion between the base end portion of the plunger and the adapter can be improved, and thus the degradation in cooling efficiency and exhaust efficiency due to the leakage of cooling air and exhaust air can be avoided. As a result, the foreign substances and so forth generated in the parison forming mechanism can be removed sufficiently, and thus the degradation in strength of the parison due to the adherence of the foreign substances and so forth to the inner surface of the parison can be avoided.

In the preferable embodiment according to the present invention, the exhaust device applies a suction force to the air discharge passage on a steady basis. In the embodiment, the suction force can be applied for a sufficiently long time before the supply of the cooling air and the move-up operation of the plunger, so that foreign substances and so forth remaining in the parison forming mechanism can be completely removed through the air discharge passage. Also, the suction force is applied for a sufficiently long time after the completion of cooling air supply and the move-down operation of the plunger, so that foreign substances and so forth remaining in the parison forming mechanism can be completely prevented from entering into the parison due to negative pressure generated by the move-down of the plunger.

The parison forming apparatus according to the present invention is further provided with a cooling mechanism for applying cooling air to the molding die to control the temperature of the molding die in addition to the above-mentioned configuration. The cooling mechanism includes a temperature sensor for detecting the temperature of the molding die; a valve mechanism for opening and closing a passage for introducing cooling air to the molding die; and a control device for controlling the flow of cooling air by determining the operation of the valve mechanism with PID control on the basis of the detection temperature of the molding die using the temperature sensor.

In the parison forming apparatus configured as described above, the operation of the valve mechanism is determined with PID control on the basis of the detection temperature of the molding die using the temperature sensor to control the flow of cooling air, so that the temperature of the molding die can be controlled with a high level of accuracy with a simple configuration, that is, by merely implementing feedback control after detecting the temperature of the molding die. Although it is difficult to delicately control the temperature especially for an ultra lightweight bottle having a thin wall thickness over a whole glass bottle, the parison forming apparatus according to the present invention makes it possible to perform such a control to thus suppress molding defects such as chips, cracks and wrinkles.

[EFFECT OF THE INVENTION]

In the present invention, cracks and chips can be prevented from occurring and the removal operation of the plunger does not cause any problem. Further the wall thickness of the parison is evenly distributed, and thus even an ultra lightweight bottle does not include an especially thin portion that may cause degradation in strength of the wall. Further, the sealability of a connection portion between the base end portion of the plunger and the adapter can be improved so that the reduction in cooling efficiency and exhaust efficiency due to the leakage of the cooling air and the exhaust air can be avoided, and the foreign substances and so forth generated in the parison forming mechanism can be fully removed so that the degradation in strength of the parison due to the adherence of the foreign substances and so forth to the inner surface of the parison can be avoided. Therefore, the present invention makes it possible to mold a glass bottle containing carbonated drinks which contain carbon dioxide gas, which is an ultra lightweight bottle with a lightweight index less than 0.7.

[BRIEF DESCRIPTION OF THE DRAWINGS]

Fig. 1 is a vertical cross-sectional view illustrating the entire structure of a parison forming apparatus according to an embodiment of the present invention.

Fig. 2 is an enlarged cross-sectional view illustrating the details of a plunger holding mechanism.

Fig. 3 is a plan view of an adapter in an embodiment shown in Fig. 1.

Fig. 4 is a plan view of a connection ring in an embodiment shown in Fig. 1.

Fig. 5 is an enlarged cross-sectional view illustrating another embodiment of the plunger holding mechanism.

Fig. 6 is an enlarged cross-sectional view illustrating still another embodiment of the plunger holding mechanism.

Fig. 7 is a view illustrating a configuration of a temperature control system for a molding die.

Fig. 8 is a cross-sectional view illustrating the configuration of a valve mechanism.

Fig. 9 is a time chart illustrating a method of controlling opening and closing operation of the valve mechanism.

Fig. 10 is a block diagram illustrating the configuration of a temperature control device.

Fig. 11 is a flowchart illustrating a flow of control by the temperature control device.

Fig. 12 is a vertical cross-sectional view illustrating the entire structure of a conventional parison forming apparatus.

Fig. 13 is an enlarged cross-sectional view illustrating the details of the plunger holding mechanism.

Fig. 14 is a front view illustrating the entire structure of an exhaust device.

Fig. 15 is a time chart illustrating the operation of the parison forming apparatus.

[MODE FOR PRACTICING THE INVENTION]

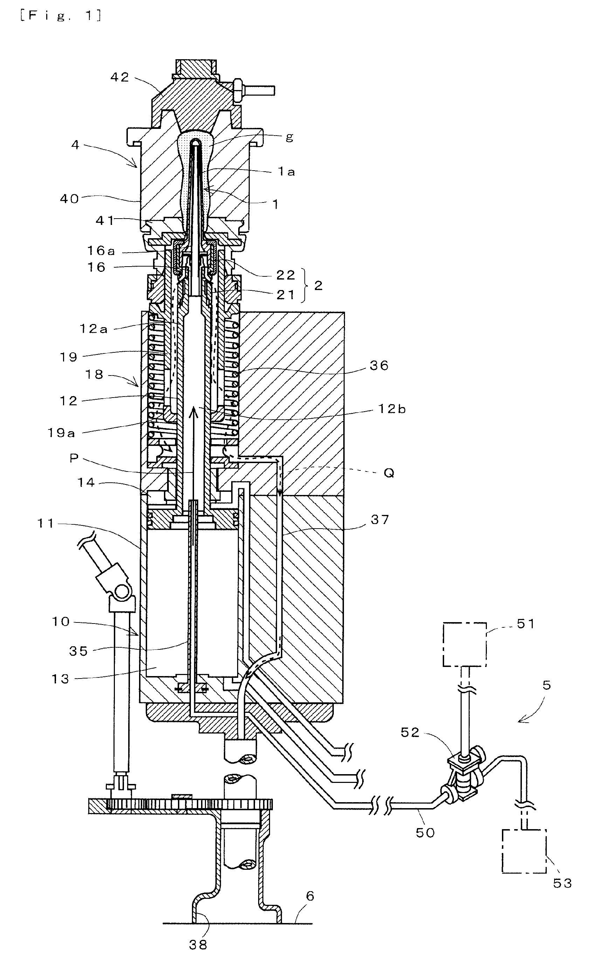

Fig. 1 illustrates the entire structure of a parison forming apparatus according to an embodiment of the present invention. The parison forming apparatus according to the embodiment is used to mold a glass bottle with a thin wall thickness over a whole bottle, especially to form a parison for molding an ultra lightweight bottle with a lightweight index less than 0.7 that is a glass bottle containing carbonated drinks referred to as "gaseous drinks." Here, "lightweight index" (referred to as "L value." See homepage of Japan Glass Bottle Association) is an index representing a degree of lightweight calculated by a function obtaining a relationship between the capacity of a bottle and the mass of the bottle (glass usage). Specifically, an L value is calculated by dividing a mass (g) of a bottle by the full capacity of the bottle (ml) to the 0.77th power, and then by multiplying the quotient by a coefficient 0.44. A bottle with an L value equal to or greater than 1.4 is referred to as "level 1," a bottle with an L value equal to and greater than 1.0 and less than 1.4 is referred to as "level 2," a bottle with an L value equal to and greater than 0.7 and less than 1.0 is referred to as "level 3," and a bottle with an L value less than 0.7 is referred to as "level 4 (ultra lightweight bottle)."

A parison forming apparatus in the illustrated example is provided with a parison forming mechanism 10 for allowing a plunger 1 to enter into a molding die 4 into which a gob is introduced to thus mold the parison g; and a cooling device 5 for cooling the plunger 1 by introducing cooling air into the inside of the plunger 1. The inside of the plunger 1 communicates with an air introduction passage P for introducing the cooling air and an air discharge passage Q for discharging the air (exhaust air) after cooling the plunger 1 to the outside. The air discharge passage Q communicates with an exhaust device 6 for exhausting the exhaust air by applying a suction force to the air discharge passage Q.

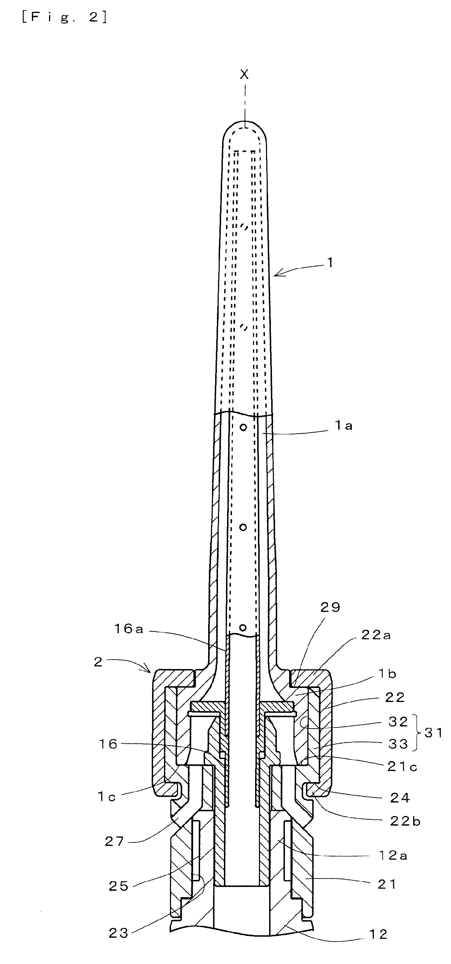

The plunger 1 is connected to the top of a hollow piston rod 12 via a plunger holding mechanism 2. The plunger holding mechanism 2 is provided with a tubular shaped adapter 21 and a donut shaped connection ring 22 as shown in Fig.1 and Fig.2. A horizontal deflection prevention mechanism 31 for preventing the top of the plunger 1 to deflect in the radial direction is provided between the adapter 21 and the base end portion 1b of the plunger 1.

A threaded portion 23 is formed on the inner peripheral surface of the lower part of the adapter 21. An annular groove 24 is formed on the outer peripheral surface of the central part of the adapter 21. The threaded portion 23 of the adapter 21 is screwed into a threaded portion 25 formed on the outer peripheral surface of the head 12a of the piston rod 12 in a cylinder 11 so that the adapter 21 is secured to the head 12a of the piston rod 12.

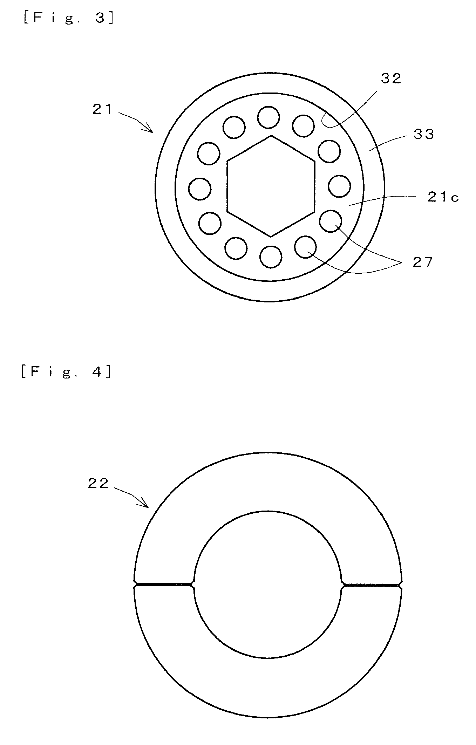

The adapter 21 is integrally provided with a cylindrical tubular part 33. A fitting hole 32 having a planarly circular shape and adapted to the cylindrical outer shape of a base end portion 1b of the plunger 1 is provided inside the tubular part 33 as shown in Figs 2 and 3. The base end portion 1b of the plunger 1 is tightly fitted in and held by the fitting hole 32 of the tubular part 33, thereby constituting a horizontally deflection prevention mechanism 31 capable of preventing an axial core X of the plunger 1 from deflecting in the radial direction. A plurality of exhaust passages 27 for discharging exhaust air is disposed at equiangular positions on the adapter 21. An exit for each exhaust passage 27 is opened below a lower end portion 22b of the connection ring 22.

The connection ring 22 has a structure dividable into two parts in the radial direction as shown in Fig. 4, and is configured to fit on the tublar part 33 of the adapter 21. An upper end portion 22a of the connection ring 22 is engaged with an annular-shaped step 29 formed on the base end portion 1b of the plunger 1, and the lower end portion 22b of the connection ring 22 is engaged with an annular-shaped groove 24 formed on the outer peripheral surface of the central portion of the adapter 21.

The base end portion 1b of the plunger 1 is tightly fitted in and held by the fitting hole 32 of the tubular part 33 of the adapter 21 by the structure of the above-described horizontal deflection prevention mechanism 31 for plunger, and thus the base end portion 1b of the plunger 1 does not move in the radial direction and is stably held, while the base end portion 1b of the plunger 1 is covered with the tubular part 33 of the adapter 21 with the outer peripheral surface of the base end portion brought into tight contact with the tubular part 33 to improve sealability, and thus the leakage of the cooling air and the exhaust air can be suppressed.

Further, even if an abutment surface between a lower end surface 1c of the base end portion 1b of the plunger 1 and an upper surface 21c in the fitting hole 32 of the adapter 21 is continuously worn away associated with long-term use, the base end portion 1b of the plunger 1 is held by the tubular part 33 of the adapter 21 with the outer peripheral surface of the base end portion 1b brought into tight contact with the tubular part 33, and thus the horizontal deflection of the plunger 1 can be prevented. For this reason, when the head of the plunger 1 is removed from the molding die 4 after the molding operation, stress concentration, for example, on the mouth portion of a parison M can be prevented, and chips and cracks are not generated in mold goods to thus allow for smooth removal operations for the plunger 1.

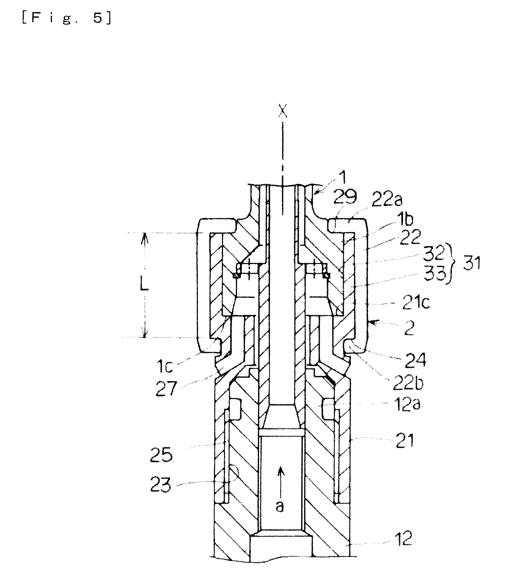

Fig. 5 shows another embodiment of the plunger holding mechanism 2. The embodiment has a fitting surface in the fitting hole 32 extended in the direction of the axial core X by setting an axial length L of the tubular part 33 of the adapter 21 to a size longer than that of the embodiment shown in Figs. 1 and 2. The base end portion 1b of the plunger 1 can be held further stably, while the above-mentioned sealability is further improved by this embodiment.

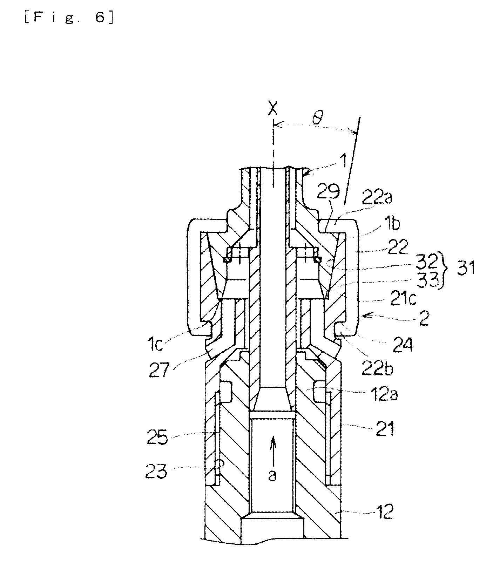

Fig. 6 shows still another embodiment of the plunger holding mechanism 2. In this embodiment, the base end portion 1b of the plunger 1 is formed into a tapered shape, while a reversely tapered fitting hole 32 adapted to the outer shape of the base end portion 1b of the plunger 1 is formed in the tubular part 33 of the adapter 21, so that the contact area between the base end portion 1b of the plunger 1 and the tubular part 33 of the adapter 21 is increased. The base end portion 1b of the plunger 1 can be held further stably while the above-mentioned sealability is further improved. An inclination angle $\theta$ of the fitting hole 32 with respect to the axial core X is preferably set equal to or less than 45°, especially equal to or less than 20° in order to prevent the horizontal deflection of the plunger 1.

In the embodiment shown in Fig. 1, the routes of the air introduction passage P and the air discharge passage Q and each configuration of the cooling device 5 and the exhaust device 6 are the same as those of the conventional example as shown in Figs. 12 to 14, and thus the detail description is omitted by applying the same reference numerals to the corresponding components. Further, in this embodiment, although the relationship between the positions for the moving-up and moving-down of the plunger 1 and the timings for supplying and stopping the supply of cooling air is the same as that of the conventional example as shown in Fig. 15, the exhaust device 6 is operated to apply a suction force to the air discharge passage Q on a steady basis instead of limiting the period as in the conventional example shown in Fig. 15, in order to apply the suction force to the parison forming mechanism 10.

The butterfly valves 68 shown in Fig. 14 are no longer needed by applying the suction force to the air discharge passage Q on a steady basis as described above, and thus the configuration can be simplified. Further, the suction force is applied for a sufficiently long time before the supply of the cooling air and the move-up operation of the plunger 1, foreign substances and so forth remaining in the parison forming mechanism 10 can be completely removed through the air discharge passage Q. Also, the suction force is applied for a sufficiently long time after completing the supply of the cooling air and the move-down operation of the plunger 1, and thus the foreign substances and so forth remaining in the parison forming mechanism 10 can be completely prevented from entering into the parison g due to negative pressure generated by the move-down of the plunger 1.

It is difficult to delicately control temperature for an ultra lightweight bottle, thus molding defects such as chips, cracks and wrinkles are likely to be generated. In order to suppress such molding defects the embodiment according to the present invention is configured to detect the temperature of the molding die 4 using a temperature sensor and control the flow of cooling air supplied to the molding die 4 on the basis of the detection temperature. As such, the temperature of the molding die 4 can be controlled with high accuracy with a simple configuration only for detecting the temperature of the molding die 4 and using feedback control.

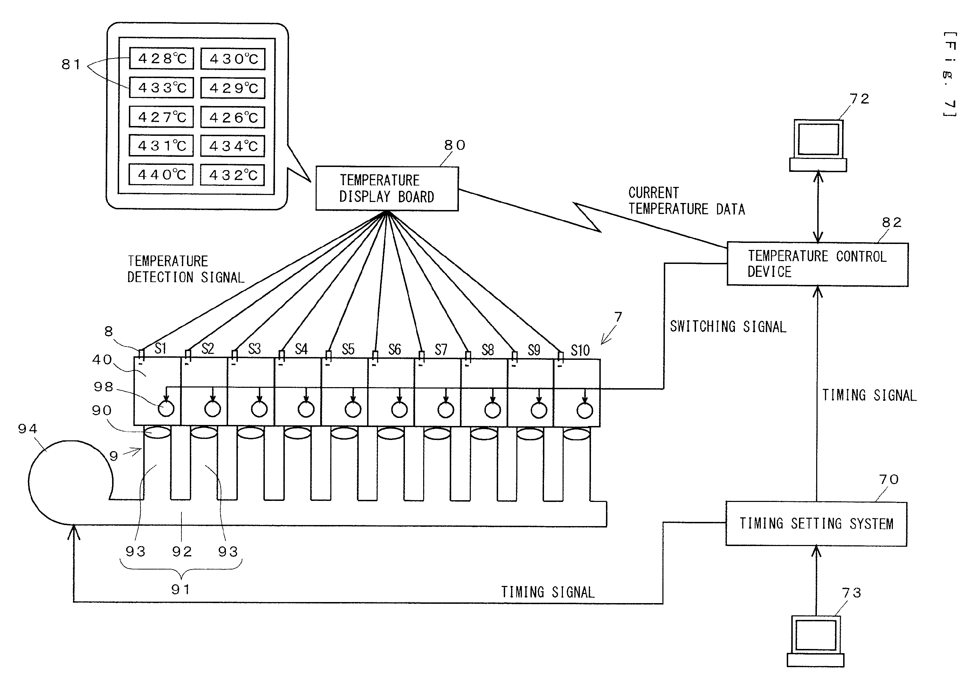

Fig. 7 shows a schematic configuration of a temperature control system for the molding die 4 used in this embodiment. A main body 7 of a bottle making machine includes a plurality of sections S1 to S10 (10 sections in this embodiment) for sequentially manufacturing glass bottles. The manufactured bottles are fed to a bottle conveyer (not shown). Molded glass bottles are conveyed to a slow cooling apparatus by the bottle conveyer. The glass bottles cooled down by the slow cooling apparatus are conveyed to an inspection stage. Inspected bottles are conveyed to a wrapping stage.

Each section S1 to S10 is respectively provided with a rough molding die 40 for forming a parison and a finishing die (not shown) for finishing the parison conveyed from the rough molding die 40 into a finally shaped glass bottle. The rough molding die 40 constitutes the molding die 4 together with a mouth molding die and a baffle. A gob is sequentially supplied into the rough molding die 40 of each section S1 to S10 by a gob supply mechanism (not shown) at the appropriate timing. Bottles finished by the finishing die of each section S1 to S10 are fed to a conveyer that constitutes a bottle conveyance path.

The operation for each section S1 to S10 described above is controlled by a timing setting system 70 individually and in series. The timing setting system 70 is a distributed processing system constituted by a number of microcomputers (hereinafter referred to as "MPU"), which generates and outputs a control signal (hereinafter, collectively referred to as "timing signal") for indicating the start and stop time of the operation of each mechanism so that various types of mechanisms included in each section S1 to S10 operate in a predetermined order.

A temperature sensor 8 is provided on or buried in the rough molding die 40 and the finishing die to detect the temperature of each molding die. Each temperature sensor 8 outputs a temperature detection signal (for example current value) with an analog amount in proportion to the temperature of the molding die. The temperature detection signal of the temperature sensor 3 provided on the rough molding die 40 is input in a temperature display board 80. The temperature detection signal of the temperature sensor 8 provided on the finishing die is input in another temperature display board (not shown). Hereinafter, the temperature control for the rough molding die 40 is described, however the temperature control for the finishing die is similar to that of the rough molding die 40, and therefore the description is omitted.

The temperature display board 80 includes an A/D converter and 10 temperature displays 81. The A/D converter receives the temperature detection signal from the temperature sensor 3 of each rough molding die 40 and converts the signal into a digital signal (hereinafter, referred to as "current temperature data"). Each temperature display 81 displays the temperature of the rough molding die 40 for each section S1 to S10 respectively in digital format using the current temperature data. The current temperature data for each rough molding die 40 is fed into a temperature control device 82 at a regular time interval. The temperature control device 82 controls the opening and closing operation for a valve mechanism 90, which will be described later, on the basis of the current temperature data taken therein and controls the flow of the cooling air for cooling the rough molding die 40. The timing for controlling the flow of the cooling air by the temperature control device 82 is controlled by the timing signal from the timing setting system 70.

A cooling mechanism 9 is provided for each rough molding die 40. Each cooling mechanism 9 controls the temperature of each rough molding die 40 respectively by supplying cooling air to each rough molding die 40. The cooling mechanism 9 according to this embodiment cools the rough molding die 40 from the outside by blowing the cooling air to the outer surface of the rough molding die 40, however the rough molding die 40 may be cooled from the inside by introducing the cooling air into a cooling passage passing through the rough molding die 40.

Each cooling mechanism 9 includes a cooling air passage 91 for introducing the cooling air to the rough molding die 40, and a valve mechanism 90 for opening and closing a branch passage 93 branched from a main passage 92 of the cooling air passage 91. The main passage 92 introduces the cooling air generated by a blower 94 into 10 branch passages 93. Each branch passage 93 introduces the cooling air to an air outlet (not shown) disposed around each rough molding die 40.

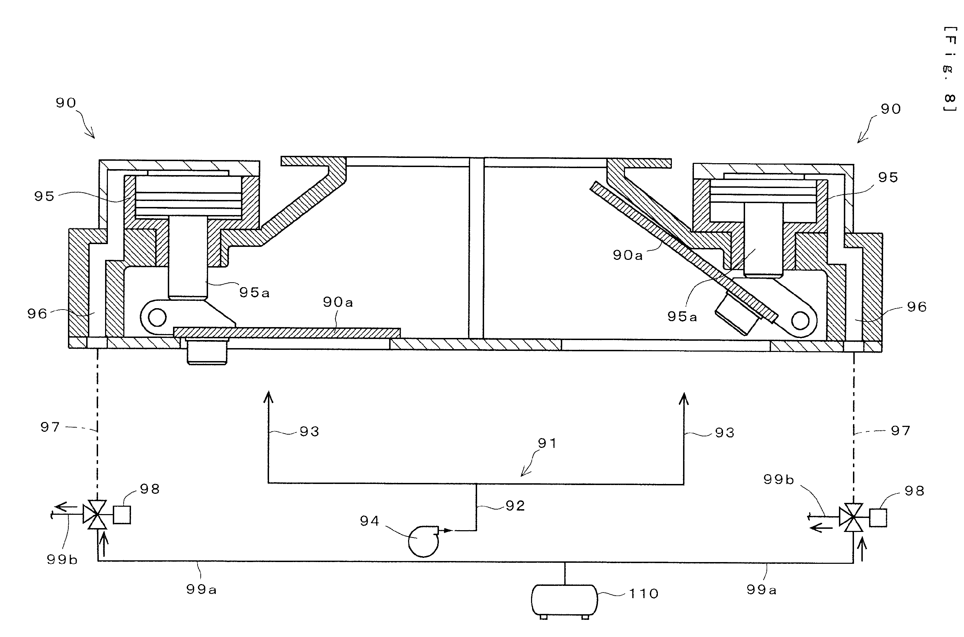

Fig. 8 shows a specific example of the valve mechanism 90. Two branch passages 93, 93 communicate with individual rough molding dies 40, and a valve 90a for each valve mechanism 90, 90 is provided in each branch passage 93 to open and close the passage. Each valve mechanism 90 includes an air cylinder 95 as an actuator. When air is supplied to the air cylinder 95 from an air passage 96, a piston rod 95a of the air cylinder 95 is pushed to close the valve 90a. When the supply of air to the air cylinder 95 is stopped, the valve 90a is pushed back and opened by receiving the air pressure of the cooling air.

The air passage 96 is connected to an air introduction/discharge pipe 97. The air introduction/discharge pipe 97 is connected to an air supply pipe 99a and a discharge pipe 99b via an electromagnetic switching valve 98. The air supply pipe 99a communicates with a compressor 110, and the discharge pipe 99b is opened to the atmosphere. When the electromagnetic switching valve 98 is switched to one side, air is supplied to the air cylinder 95 from the compressor 110 via the air supply pipe 99a, the air introduction/discharge pipe 97, and the air passage 96. When the electromagnetic switching valve 98 is switched to another side, the air supplied to the air cylinder 95 is released to the outside via the air passage 96, the air introduction/discharge pipe 97, and the discharge pipe 99b.

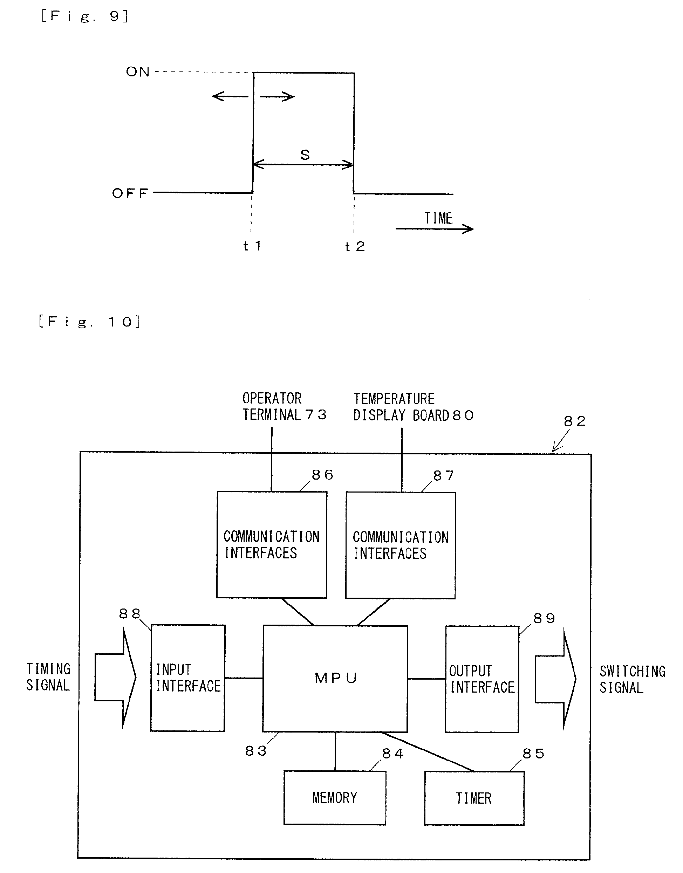

Fig. 9 shows a method for controlling the opening and closing operation of the valve mechanism 90. In the drawing, S represents a time length in which the valve is opened, that is a cooling period corresponding to the operation amount of the valve mechanism 90. The valve is opened at the timing of t1 and is closed at the timing of t2. A switching signal is given to the electromagnetic switching valve 98 at the timing of t1 and t2 respectively. A degree of opening of the valve may be employed instead of the opening time S of the valve as the operation amount of the valve mechanism 90.

The opening and closing operation of the valve mechanism 90 is controlled on the basis of the detection temperature of the rough molding die 40 using the temperature sensor 8, and thus the flow of the cooling air is controlled. The opening period S of the valve is determined by executing an operation based on PID control. In this embodiment, the timing t1 of opening the valve is shifted in accordance with the operation results as indicated by arrows in the drawing while the timing t2 of closing the valve being fixed.

A difference $\Delta T_i$ (hereinafter, referred to as "temperature deviation") between a current temperature $T_{pi}$ and a target temperature $T_{si}$ is given as follows:

$$\Delta T_i = T_{pi} - T_{si}$$

Where the target temperature of the rough molding die 40 is represented by $T_{si}$, and the current temperature (corresponding to the above-mentioned "current temperature data") of the rough molding die 40 is represented by $T_{pi}$.

The current temperature data is fed into a temperature control device 82 at a regular time interval, and is sequentially accumulated in a memory 84 that is described later. The accumulated current temperature data is individually identified by an argument i. The most current data corresponds to i = 0, and as it goes back to the past, the data corresponds to i = -1, -2, -3 ⋯. Hereinafter, it follows that the argument i that corresponds to the oldest data in the accumulated data is defined as -∞.

The PID control is constituted by a combination of proportional control, integral control and differential control. When the PID control is executed by a programmed computer, the operation expression for the PID control includes a proportional term given by the product of a factor of proportionality A and a temperature deviation $\Delta T_i$, an integral term given by the product of an integral action coefficient B and a temperature deviation $\Delta T_i$, and a differential term given by the product of a differential coefficient C and the difference ($\Delta T_0$ - $\Delta T_{-1}$) between the current temperature deviation and the previous temperature deviation.

In order to calculate an accumulated value of temperature deviation $\Delta T_i$ in the integral term, the range of integration is set from zero to negative infinity as shown in the following expression (1), and weighting of $2^i$, that is, $2^0$, $2^{-1}$, $2^{-2}$, $2^{-3}$, ⋯ is applied to each temperature deviation $\Delta T_i$ from zero to negative infinity. As a result, the operation expression for PID control is given by an expression (2).

Normally, the integral term needs to have the interval of integration in PID control, however this embodiment does not need to have the interval of integration because weighting is applied in this embodiment.

The coefficient for weighting is not limited to $2^i$, but includes $n^i$ (n > 0). Further, i corresponding to past data is not limited to a negative value, but includes a positive value (that is, i = 0, 1, 2, ⋯ ∞) The coefficient for weighting in this case may be set, for example, as $1 / n^i$ (n > 0).

[Expression 1]

$$\text{Integral term} = B \times \sum_{i=0}^{-\infty} (\Delta T_i \times 2^i) \qquad \cdots \text{expression (1)}$$

[Expression 2]

$$\text{Operation amount} = A \times \Delta T_i + B \times \sum_{i=0}^{-\infty} (\Delta T_i \times 2^i) + C (\Delta T_0 - \Delta T_{-1})$$

$$\cdots \text{expression (2)}$$

In this embodiment, the above-mentioned temperature control device 82 executes operation using PID control on the basis of the principle described above to acquire the operation amount of the valve mechanism 90 (open time S of the valve 90a), and controls the opening and closing operation of the valve 90a on the basis of the operation results. Further, in this embodiment, in order to prevent the temperature of the rough molding die 40 from drastically changing in accordance with an operation amount of the valve mechanism 90 determined to have an extremely large or small value, when an operation result using PID control exceeds a prescribed upper limit the operation result is corrected into the upper limit, and when an operation result using the PID control falls below a prescribed lower limit the operation result is corrected into the lower limit. Further in this embodiment, when the difference between the current operation result and the previous operation result exceeds a prescribed threshold, the current operation result is corrected so that the difference between the current operation result and the previous operation result becomes the threshold.

The valve 90a is operated to open or close in accordance with the switching operation of the electromagnetic switching valve 98, and the switching signal for the electromagnetic switching valve 98 is given by the temperature control device 82. Fig. 10 shows a detailed configuration of the temperature control device 82. The temperature control device 82 includes an MPU 83 as a main body for control and computation, a memory 84 for storing a program and data, and a timer 85 for measuring elapsed time. Further, the MPU 83 is connected to an operator terminal 73 and a temperature display board 80 via communication interfaces 86, 87. Still further, the MPU 83 receives a timing signal from the timing setting system 70 via an input interface 88, and outputs a switching signal to the electromagnetic valve 98 for each section S1 to S10 via an output inter face 89.

The timing setting system 70 sets an operation timing for each of the components in an entire bottle manufacturing machine, and outputs a timing signal for commanding the temperature control device 82 to cool a rough molding die 40 for each section S1 to S10. When receiving a timing signal for cooling the rough molding die 40 from the timing setting system 70, the MPU 83 in the temperature control device 82 determines that it is time to cool a rough molding die for a prescribed section and determines the cooling period S. The MPU 83 sends a switching signal to an electromagnetic switching valve 98 for the corresponding section in accordance with the timing on the basis of the cooling period S.

In Fig. 7, one operator terminal 72 is provided to input and set each coefficient A, B, C and so forth for a target temperature and PID control with respect to the temperature control device 82. Another operator terminal 73 is provided to input and set various types of data associated with the operation of the bottle manufacturing machine with respect to the timing setting system 70.

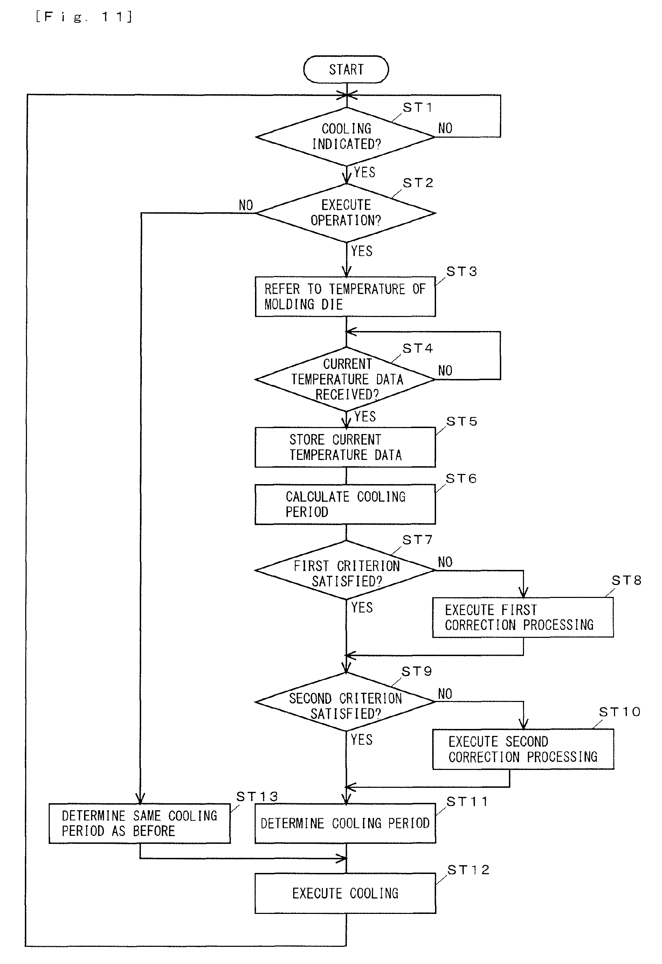

Fig. 11 shows flow of control the MPU 83 in the temperature control device 82 executes for cooling respective rough molding dies 40 by determining a cooling period. In the drawing, "ST" is an abbreviation of "step" that represents each step in the flow of control.

In a ST1 of the drawing, whether or not it is time to cool a rough molding die 40 to be controlled is determined. Here, when a timing signal from the timing setting system 70 is received, the determination in ST1 becomes "Yes," and then whether or not operation for calculating cooling period should be executed is determined (ST2). If the determination in ST2 is "Yes," program will go to ST3, but if the operation is not executed this time and the determination in ST2 is "No," program will go to ST13 and determines a preliminarily set cooling period.

If it is determined to execute operation, the determination in ST2 becomes "Yes," and the MPU 83 refers to the temperature display board 80 for the temperature of a molding die for the corresponding rough molding die 40 (ST3). If the current temperature data is sent from the temperature display board 80 in response to this inquiry, the determination in ST4 becomes "Yes," and the current temperature data is stored in the memory 84 (ST5).

Next, the MPU 83 calculates the cooling period S by executing the operation using PID control as described above (ST6). That is, the MPU 83 reads the current temperature data corresponding to the above-described value of "i" while sequentially changing the value of "i" from 0, and obtains a temperature deviation from the current temperature data and the target temperature input from the operator terminal 72. Then, the cooling period S is calculated by applying the temperature deviations $\Delta T_i$ obtained for each value of "i" to expression (2). Referring to the above-mentioned expression (2), operation is executed using all the current temperature data accumulated in the temperature control device 82, but not limited to this, the operation may be executed by reading a prescribed number of current temperature data in reverse chronological order.

Next, in ST7, whether or not the operation result is within a prescribed range is determined. If the operation result is within a prescribed range, it is determined that the operation result satisfies first criterion and the determination in ST7 becomes "Yes," and thus the operation result is not corrected. If the operation result is not within a prescribed range, it is determined that the operation result does not satisfy the first criterion and the determination in ST7 becomes "No," and thus the MPU 83 executes first correction processing (ST8). In the first correction processing, the operation result is corrected into a prescribed upper limit when the operation result exceeds the upper limit, and the operation result is corrected into a prescribed lower limit when the operation result falls below the lower limit.

Next, in ST9, whether or not the difference between the current operation result (corrected data if the first correction processing is applied) and the previous operation result exceeds a prescribed threshold is determined. If the current operation result does not exceed the threshold, it is determined that the current operation result satisfies second criterion and the determination in ST9 becomes "Yes." If the current operation result exceeds the threshold, it is determined that the current operation result does not satisfy the second criterion and the determination in ST9 becomes "No," and the MPU 83 executes second correction processing (ST10). In the second correction processing, the current operation result is corrected so that the difference between the current operation result and the previous operation result is equal to the threshold.

The cooling period obtained by the above-described steps is determined as the current cooling period for the corresponding rough molding die 40 and stored in the memory 84 (ST11), and then cooling processing is executed by the opening and closing operation of the valve mechanism 90 based on the determined cooling period (ST12). The cooling period is determined to execute the cooling processing for other rough molding dies 40 by carrying out the same steps.

In the parison forming apparatus described above, the base end portion of the plunger 1 is firmly held by the fitting hole 32 of the tubular part 33 of the adapter 21, and thus the looseness in the base end portion 1b of the plunger 1 and the deflection of the head of the plunger 1 in the radial direction are suppressed and the plunger 1 is prevented from being inclined to enter into molten glass. When the head of the plunger 1 is removed from the inside of the molding die, an excessive stress is prevented from concentrating on the mouth part of the parison g, and thus chips and cracks are prevented from being caused. Consequently, there is no problem caused by the removal operation of the plunger 1.

Also, the molten glass is evenly distributed in the whole parison g, the parison g can have a favorable distribution of wall thickness. In particular, an ultra lightweight bottle with thin wall thickness over a whole glass bottle is prevented from being subjected to degraded strength caused by especially thin portion of wall thickness.

Furthermore, the base end portion 1b of the plunger 1 tightly fits into the fitting hole 32 of the tubular part 33 of the adapter 21, and thus the sealability in the connection portion between the base end portion 1b of the plunger 1 and the adapter 21 is improved, a decrease in the cooling efficiency and exhaust efficiency is prevented from being caused by the leakage of cooling air and exhaust air. As a result, foreign substances and so forth generated in the parison forming mechanism 10 is fully removed, thus preventing the degradation in the strength of the parison g due to the adherence of the foreign substances and so forth to the inner surface of the parison g.

The operation amount of the valve mechanism 90 is determined using PID control on the basis of the temperature of the rough molding die 40 detected by the temperature sensor 8 and the flow of cooling air is controlled, the temperature of the rough molding die 40 can be controlled with high accuracy with a simple configuration only for detecting the temperature of the molding die 40 and using feedback control. In particular, although it is difficult to delicately control the temperature especially for an ultra lightweight bottle having a thin wall thickness over a whole glass bottle, the parison forming apparatus according to the present invention makes it possible to perform such a control to thus suppress molding defects such as chips, cracks and wrinkles.

[Description of reference numerals]

| 1 | Plunger |
|---|---|
| 2 | Plunger holding mechanism |
| 4 | Molding die |
| 5 | Cooling device |
| 6 | Exhaust device |
| 11 | Cylinder |
| 12 | Piston rod |
| 21 | Adapter |
| 22 | Connection ring |
| 27 | Exhaust passage |
| 32 | Fitting hole |
| 33 | Tublar part |
| 40 | Rough molding die |
| 82 | Temperature control device |
| 90 | Valve mechanism |
| P | Air introduction passage |
| Q | Air discharge passage |

**Claims**

1.  A parison forming apparatus comprising: a molding die into which a gob is introduced; a plunger entering into the inside of the molding die for forming a parison from the gob together with the molding die; a cylinder that allows the plunger to reciprocally move with respect to the molding die; and a cooling device for introducing cooling air into the inside of the plunger to cool the plunger, wherein
    a base end portion of the plunger is connected to and held by the head of a piston rod of the cylinder via a plunger holding mechanism; the plunger holding mechanism has an adapter connected to the head of the piston rod; the adapter is integrally provided with a tubular part having a fitting hole adapted to the cylindrical outer shape of the base end portion of the plunger; the base end portion of the plunger is fitted in and held by the fitting hole of the tubular part while a connection ring for connecting the adapter and the base end portion of the plunger fitting on the tubular part of the adapter; the inside of the plunger communicates with an air discharge passage through an exhaust passage provided on the adapter; the air discharge passage is configured to communicate with an exhaust device for guiding the air after cooling to the air discharging passage by applying a suction force to the air discharge passage, thereby exhausting the air to the outside.

2.  A parison forming apparatus according to claim 1, wherein the exhaust device applies the suction force to the air discharge passage on a steady basis.

3.  A parison forming apparatus according to claim 1, further comprising a cooling mechanism for controlling the temperature of the molding die by applying cooling air to the molding die, wherein the cooling mechanism includes a temperature sensor for detecting the temperature of the molding die, a valve mechanism for opening and closing a passage for guiding the cooling air to the molding die, and a control device for controlling the flow of the cooling air by determining the operation amount of the valve mechanism using PID control on the basis of the temperature of the molding die detected by the temperature sensor.

[F i g. 1]

EP 2 980 032 A1

[Fig. 2]

14

[Fig. 3]

[Fig. 4]

[F i g. 5]

[Fig. 6]

[Fig. 7]

[Fig. 8]

[F i g. 9]

[F i g. 1 0]

[Fig. 11]

```
                         ┌─────────┐
                         │  START  │
                         └────┬────┘
                              │
        ┌─────────────────────┤
        │                     │
        │              ╱───────────────╲   ST1
        │             ╱     COOLING      ╲   NO
        │            ╱    INDICATED?       ╲──────┐
        │            ╲                     ╱       │
        │             ╲                   ╱        │
        │              ╲───────┬─────────╱         │
        │                      │ YES               │
        │                      │        ST2        │
        │        NO     ╱───────────────╲          │
        │       ┌──────╱     EXECUTE      ╲         │
        │       │      ╲   OPERATION?     ╱         │
        │       │       ╲               ╱          │
        │       │        ╲──────┬──────╱           │
        │       │               │ YES              │
        │       │        ┌──────┴─────────┐  ST3   │
        │       │        │ REFER TO TEMPERATURE OF │
        │       │        │ MOLDING DIE    │        │
        │       │        └──────┬─────────┘        │
        │       │               │◄──────────┐      │
        │       │        ╱───────────────╲  │ ST4  │
        │       │       ╱     CURRENT      ╲ │  NO  │
        │       │      ╱   TEMPERATURE DATA ╲─┘     │
        │       │      ╲     RECEIVED?      ╱       │
        │       │       ╲                  ╱        │
        │       │        ╲──────┬─────────╱         │
        │       │               │ YES              │
        │       │        ┌──────┴─────────┐  ST5   │
        │       │        │ STORE CURRENT  │        │
        │       │        │ TEMPERATURE DATA│       │
        │       │        └──────┬─────────┘        │
        │       │        ┌──────┴─────────┐  ST6   │
        │       │        │ CALCULATE COOLING       │
        │       │        │ PERIOD         │        │
        │       │        └──────┬─────────┘        │
        │       │               │       ST7        │
        │       │        ╱───────────────╲   NO    │
        │       │       ╱  FIRST CRITERION ╲───────┐│
        │       │       ╲   SATISFIED?     ╱       ││
        │       │        ╲──────┬─────────╱        ││
        │       │               │ YES     ┌────────┴┴──────┐ ST8
        │       │               │         │ EXECUTE FIRST  │
        │       │               │◄────────│ CORRECTION PROCESSING│
        │       │               │         └────────────────┘
        │       │        ╱───────────────╲   ST9
        │       │       ╱  SECOND CRITERION╲  NO
        │       │       ╲   SATISFIED?     ╱────────┐
        │       │        ╲──────┬─────────╱         │
        │       │               │ YES     ┌─────────┴──────┐ ST10
        │       │               │         │ EXECUTE SECOND │
        │       │               │◄────────│ CORRECTION PROCESSING│
        │       │               │         └────────────────┘
        │  ┌────┴──────┐ ST13    │        ST11
        │  │ DETERMINE SAME COOLING│ ┌────┴──────────┐
        │  │ PERIOD AS BEFORE │    │ │ DETERMINE COOLING PERIOD│
        │  └────┬──────┘         │ └────┬──────────┘
        │       └────────────────┼──────┤
        │                        │      │
        │                 ┌──────┴──────┐ ST12
        │                 │ EXECUTE COOLING│
        │                 └──────┬──────┘
        └────────────────────────┘
```

[Fig. 12]

[Fig. 13]

EP 2 980 032 A1

[Fig. 14]

24

[Fig. 15]

## INTERNATIONAL SEARCH REPORT

| International application No. |
| --- |
| PCT/JP2014/057727 |

**A. CLASSIFICATION OF SUBJECT MATTER**

*C03B9/193*(2006.01)i

According to International Patent Classification (IPC) or to both national classification and IPC

**B. FIELDS SEARCHED**

Minimum documentation searched (classification system followed by classification symbols)
C03B7/00-7/22, 9/00-17/06, 19/00-19/10, 21/00-21/06

Documentation searched other than minimum documentation to the extent that such documents are included in the fields searched
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 11-209129 A (Nihon Yamamura Glass Co., Ltd.), 03 August 1999 (03.08.1999), claims; examples; fig. 1, 2, 5; paragraphs [0043] to [0047] (Family: none) | 1-3 |
| Y | JP 2001-294431 A (Nihon Yamamura Glass Co., Ltd.), 23 October 2001 (23.10.2001), claims; fig. 2; paragraphs [0024] to [0025] (Family: none) | 1-3 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 June, 2014 (11.06.14) | 24 June, 2014 (24.06.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/057727

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2011-136853 A  (Nihon Yamamura Glass Co., Ltd.), 14 July 2011 (14.07.2011), claims; paragraph [0001]; drawings (Family: none) | 3 |
| A | JP 06-219751 A  (Emhart Glass Machinery Investments Inc.), 09 August 1994 (09.08.1994), claims; examples & US 5445662 A          & US 5609659 A & EP 603011 A2          & DE 69323848 C & DE 69323848 D          & AU 5191193 A & MX 9307734 A          & CN 1089242 A & AU 665468 B | 1-3 |

Form PCT/ISA/210 (continuation of second sheet) (July 2009)

**EP 2 980 032 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4392107 B